(19) Europäisches Patentamt
European Patent Office
Office européen des brevets

(11) Publication number: **0 379 758 A1**

(12) **EUROPEAN PATENT APPLICATION**

(21) Application number: **89300705.4**

(22) Date of filing: **25.01.89**

(51) Int. Cl.[5]: **C08F 110/06, C08F 4/64, C07F 17/00**

(43) Date of publication of application: **01.08.90 Bulletin 90/31**

(84) Designated Contracting States: **BE DE ES FR IT NL**

(71) Applicant: **IMPERIAL CHEMICAL INDUSTRIES PLC**
**Imperial Chemical House, Millbank**
**London SW1P 3JF(GB)**

(72) Inventor: **Green, Malcolm Leslie Hadder**
**7 Saint Cross Road**
**Oxford(GB)**
Inventor: **Kelland, John William**
**9 Ralfland Way**
**Nunthorpe, Cleveland(GB)**
Inventor: **Gardiner, Ian**
**Dept. of Chemistry University of Arizona**
**Tucson, Arizona 85721(US)**

(74) Representative: **Locke, Timothy John et al**
**Imperial Chemical Industries PLC Legal Department: Patents Bessemer Road PO Box 6**
**Welwyn Garden City Hertfordshire, AL7 1HD(GB)**

(54) **Polymers and polymerisation catalyst components.**

(57) A novel form of polypropylene which is clear and low melting, is predominantly isotactic but has 2 to 20% of oppositely oriented propylene residues. It may be made using novel optically active catalyst components which are derivatives of tartaric acid.

EP 0 379 758 A1

Xerox Copy Centre

## Polymers and Polymerisation Catalyst Components

This invention relates to polymers and polymerisation catalyst components.

It is known to polymerise propylene using catalysts comprising a zirconium, hafnium or titanium compound containing Zr-Halide, Mf-Halide or Ti-Halide) bonds and aluminium compounds containing an aluminium alkyl bond.

Such catalysts generally produce a mixture or atactic polypropylene in which the steric orientation of the propylene residues is random and isotactic polypropylene in which the steric orientation of the residues is uniform. The former is of little value and considerable care is taken to maximise the production of the latter which is a valuable, high melting polymer.

We have now discovered a form of polypropylene which is of high clarity and melts in the range 125-155 °C. This renders it useful for example as an adhesive for sticking layers of clear sheet or film together. It is characterised in that 80 or preferably 90 to 98%, and preferably 94 to 98% of the propylene residues have the same steric orientation but the remainder (which are preferably randomly distributed in the polymer chains) have the opposite steric orientation. It is preferably produced by polymerising propylene to form a polymer in which preferably most of the propylene residues of opposite orientation are separated from one another, more preferably at least 90% are so separated.

The novel form of polypropylene may be produced using catalysts which contain a novel chemical compound of formula (I).

Formula I

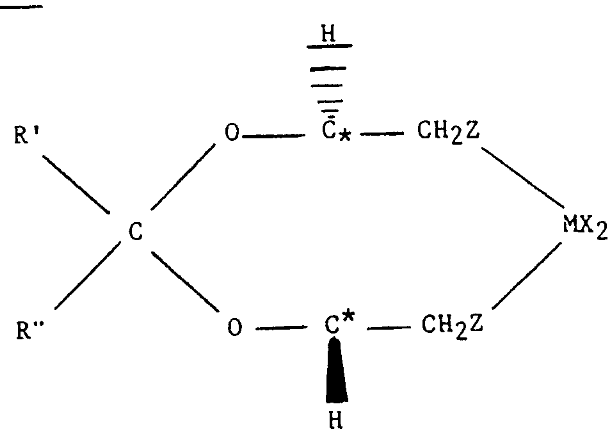

in which the assymetrical carbon atoms (which are identified by asterisks) with their substituents are not mirror images of one another, M represents hafnium, preferably titanium and more preferably zirconium, X represents halogen, preferably bromine and more preferably chlorine, and R′ and R″ are individually alkyl groups, for example lower alkyl groups having 1 to 6 carbon atoms, for example ethyl or methyl groups and Z is

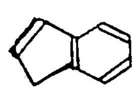 , 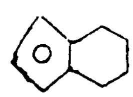

or 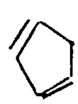

which groups may be substituted by lower alkyl groups having 1, 2 or 3 carbon atoms if desired. The atom M is believed to be co-ordinated with both cyclopentadienyl rings.

These compounds may be produced for example by reacting a compound of formula (II)

Formula II

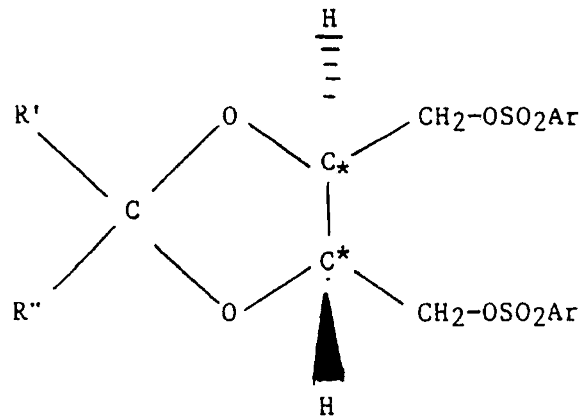

where Ar is an aryl group for example a phenyl or alkyl substituted phenyl group containing 6 to 10 carbon atoms with a cyclopentadienyl magnesium halide of formula ZMgX which is preferably the bromide, to produce a compound of formula III

Formula III

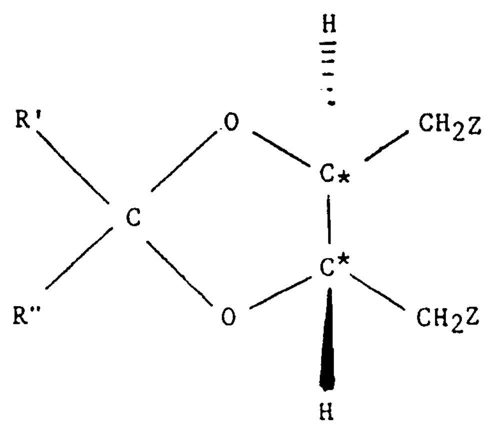

which is then converted to its di alkali metal salt (for example by treatment with sodium amide or an alkyl lithium compound, for example butyl lithium) and then reacted with a compound of formula $MX_4$. The product can be purified by recrystallisation, for example from toluene.

The compound of formula (II) can be produced from tartaric acid by esterification to produce a di lower alkyl, for example diethyl tartarate, reaction with a ketal for example 2,2′ dimethoxy propane to give a compound of formula

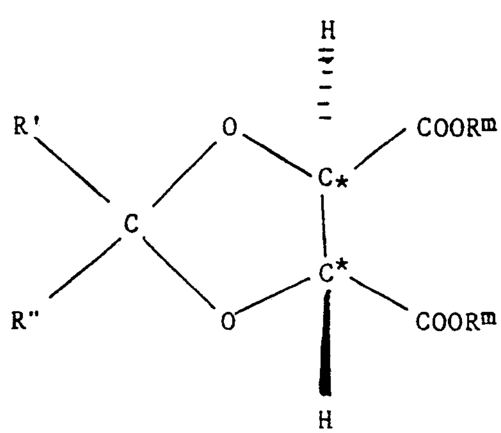

where $R''$ may be a $C_1$ to $C_6$ alkyl group, and reducing this with lithium aluminium hydride or sodium borohydride to convert both $-COOR'''$ groups to $-CH_2OH$ groups and reacting the product with an aryl sulphonyl chloride in the presence of a base.

The polymerisation of propylene using the above catalyst can be carried out in known manner using known co-catalysts and activators if desired. Polymerisation is very suitably carried out by a combination of the compound of formula I and an organic compound for example a trihydrocarbon aluminium compound, for example aluminium tri($C_{1-10}$) alkyl or a partially hydrolysed aluminium lower (for example $C_1$ to $C_4$) alkyl. This may be prepared by contacting an aluminium tri-alkyl with a compound which contains water of crystallisation, for example hydrated aluminium sulphate or copper sulphate.

Very suitably for example a dialkylphthalate and/or a dialkyl dialkoxysilane may be used as an electron donor.

Polymerisation may take place at 20 to 100° C and pressures of 1 to 50 bars absolute and preferably 5 to 30 bars absolute, in the presence or absence of a solvent for the catalyst.

## Examples

### Preparation of (4R,5R)-trans-4,5-di(ethylcarboxylate)-2,2-dimethyl-1,3-dioxolane

496g (2.4 moles) of diethyl tartarate, 276g (2.65 moles) of 2,2-dimethoxypropane, 1 litre of dry benzene and 1g of p-toluenesulphonic acid were refluxed together in a 2 litre round bottomed flask and the benzene-methanol azeotrope was removed at the head of a distillation column (b.p. 58° C). After 10 hours the distillate temperature had risen to 77° C. Neutralisation with 2g of anhydrous potassium carbonate was followed by removal of solvent and unreacted 2,2-dimethoxypropane under reduced pressure. The product distilled as a colourless liquid at 85-96° C, 0.04 mmHg. Yield = 554g (93%).

### Preparation of (4R,5R)-trans-4,5-di(hydroxymethyl)-2,2-dimethyl-1,3-dioxolane

A suspension of 90g (2.37 moles) of lithium aluminium hydride in 3 litres of dry diethylether was stirred for 1 hour in a 10 litre round bottomed flask equipped with overhead mechanical stirrer and ether condenser. A solution of (4R,5R)-trans-4,5-di(ethylcarboxylate)-2,2-dimethyl-1,3-dioxolane (554g, 2.25 moles) in 3 litres of diethylether was added slowly over a period of 2 hours, the heat of reaction causing gentle refluxing. After addition had been completed the mixture was refluxed for a further 3 hours. After cooling there followed careful additions of ethyl acetate (200 ml), water (210 ml), 4N sodium hydroxide (210 ml), and water (750 ml). The ether fraction was decanted from the solid and reduced in volume to 1 litre. The inorganic residues were stirred overnight in 2.5 litres of tetrahydrofuran and the solution decanted from the solid, added to the ether solution, and the combined extracts reduced in volume to 1 litre. After drying over magnesium sulphate the solvent was removed under reduced pressure and distillation gave the product. B.p. 134-138° C, 6mmHg. Yield = 200g (55%).

### Preparation of (4R,5R)-trans-4,5-di(4-methylbenzenesulphonatomethyl)-2,2-dimethyl-1,3-dioxolane

A solution of 200g (1.23 moles) of (4R,5R)-trans-4,5-di(hydroxymethyl)-2,2-dimethyl-1,3-dioxolane in 1.3 litres of freshly distilled pyridine was cooled to -10° C. 490g (2.57 moles) of p-toluenesulphonyl chloride were added and stirred for 30 minutes until the solution became homogeneous. After storage at 0° C for 12 hours, 2.6 litres of distilled water were added slowly over a period of 2.5 hours. Storage at 0° C for a further 2 hours and filtration gave the crude product which could be recrystallised from 1 litre of boiling ethanol. Yield = 470g (86%).

### Preparation of indenylmagnesium bromide

Magnesium metal (70g, 2.88 moles) was suspended in 1 litre of diethylether in a 3 litre round bottomed flask equipped with reflux condenser and overhead stirrer. 300 ml of ethyl bromide were added over a period of 3 hours. After dissolution of the magnesium was complete 350 ml of indene and 1 litre of toluene

was added and the diethylether distilled off with nitrogen gas bubbling through the reaction mixture. After refluxing for a further 12 hours and cooling, the toluene was decanted off and the solid recrystallised from hot toluene. Yield = 592g (90%).

Preparation of (4R,5R)-trans-4,5-di(1H-indene-3-methyl)2,2-dimethyl-1,3-dioxolane

120g (0.55 moles) of indenylmagnesium bromide and 300 ml of toluene were stirred together at 0° C. 94g (0.2 moles) of (4R,5R)-trans-4,5- di(4-methylbenzenesulphonatomethyl) -2,2- dimethyl -1,3-dioxolane were dissolved in 400 ml of toluene. The dissolution was slightly endothermic and aided by gentle heating. The solution of the di(4-methylbenzenesulphonate) was added dropwise to the Grignard suspension over a period of 2 hours. The reaction vessel was allowed to warm up to ambient temperatures overnight. The solution was filtered and the solid washed with 200 ml of petroleum ether (b.p. 40-60° C). The solvent was removed from the combined extracts under reduced pressure. The resulting oil was extracted petroleum ether (200ml, b.p. 40-60° C), filtered, and the solvent removed under reduced pressure. The resulting viscous oil was dissolved in 50ml of diethylether and eluted down a chromatography column containing neutral alumina in diethylether. The first, green band was collected and the solvent removed under reduced pressure to give the product as a viscous, pale green oil. Yield = 54.4g (76%). This compound is referred to herein as Indiox.

Preparation of dilithium(INDIOX)

22.64g (0.063 mol) of Indiox were dissolved in 250 ml of tetrahydrofuran and cooled to 0° C. 55 ml of a 2.5M solution of $Bu^nLi$ in hexanes was added dropwise whereupon the solution turned red with eventual precipitation of a solid. The solution was then filtered and washed with 200 ml of diethylether. Toluene (200ml) was added and heated until the solid dissolved. Cooling of the solution produced pale green crystals which were filtered and dried in vacuo. Yield = 17.2g.

Titration of the solid revealed it to have 4 molecules of THF associated with each molecule of dilithium salt.

Reaction of dilithium(INDIOX) with $ZrCl_4$

1.2g (5 mmoles) of $ZrCl_4$ were placed in a 250 ml round bottom flask with sidearm and 50ml of THF were distilled on at -196° C. The reaction vessel was allowed to reach ambient temperatures before being heated to 50° C with stirring. 3.2g (4.9 mmoles) of the dilithium salt dissolved in 100 ml of THF was added dropwise to the $ZrCl_4$ solution over a period of 1 hour. After addition was complete, the solution was stirred at 50° C for a further 30 minutes. The solution was filtered and reduced in volume to about 50 ml. Diethylether (20 ml) and petroleum ether (10 ml, b.p. 40-60° C) were added and a yellow precipitate formed. The solution was decanted from the yellow solid and the solvent removed under reduced pressure. The resulting yellow oil was stirred with 100 ml of diethylether and methanol was added dropwise until all of the oily solid had disappeared to yield a yellow crystalline solid. The solution was decanted, the yellow solids combined and washed with methanol (30 ml) and diethylether (30 ml) before being dried in vacuo. The solid was recrystallised from 25 ml of boiling toluene. Yield = 0.27g (10%).

Preparation of (OctahydroINDIOX)$ZrCl_2$

1.0g of (INDIOX)$ZrCl_2$ was placed in a 300 ml Parr hydrogenator together with 75 mg of amorphous $PtO_2$ and 50 ml of dichloromethane. This was treated with 100 atm of $H_2$ at room temperature for 2 hours. The solution was filtered and the solvent removed under reduced pressure to give a pale brown solid. This was recrystallised from 5 ml of hot toluene to give the product as a very pale green crystalline solid. Yield = 0.89g (87%).

Preparation of methylaluminoxane (MAO)

78.8g (0.125 moles = 2 moles $H_2O$) of finely powdered $Al_2(SO_4)_3.16H_2O$ were stirred in 100 ml of toluene at 20°C. 500ml of a 2M solution of trimethylaluminium in toluene were added dropwise over a period of not less than 4 hours. After 24 hours the solution was filtered and the solvent removed under reduced pressure to give a colourless, caramel-like substance. Toluene (50 ml) was added to redissolve the compound and the solvent was again removed under reduced pressure. This process was repeated several times to remove all the distillable trimethylaluminium. The product was dried *in vacuo* at 70°C to give a white, apparently crystalline material. Yield = 18.7g (32%).

Polymerisation of propylene using the (INDIOX)$ZrCl_2$/MAO system

Polymerisation of propylene was performed in a 300 ml Parr hydrogenation apparatus equipped with a mechanical stirrer and thermostatic bath at 50°C. A solution of $5x10^{-6}$ moles of (Indiox $ZrCl_2$ and $5x10^{-3}$ moles of MAO in 10 ml of toluene was added to 150 ml of toluene contained in the reaction vessel. After 20 minutes equilibration time the nitrogen atmosphere was removed and 25-35g of propylene, pre-dried as a liquid over magnesium sulphate in a Fischer-Porter bottle, was distilled in to give a total pressure at 50°C of 18 bars gauge. The reaction was allowed to continue until the pressure in the vessel dropped to atmospheric pressure. The vessel was opened, the contents transferred to a 500 ml round bottom flask and treated with 20 ml of methanol before removing all solvent under reduced presure. The remaining material was extracted with a total of 1 litre of pentane and the solid so obtained was washed with dilute hydrochloric acid, water, acetone and diethylether before being dried *in vacuo*. The pentane extract was evaporated to dryness to yield an opaque material which varied typically from a viscous liquid to a waxy solid.

The $^{13}C$ NMR spectrum of the pentane insoluble solid is characterised by simple resonances from the$\alpha$-methyl carbon. These have chemical shifts ($\delta c$) of 21.80 ppm, 21.56 ppm, 21.01 ppm and 19.86 ppm characteristic of pentad sequences mmmm, mmmr, mmrr and mrrm. This shows that the polymer chains are essentially isotactic with isolated dislocations accounting for 2.7% of the total propylene residues represented by oppositely sterically oriented propylene residues.

Melting point determination by differential scanning calorimetry gave a sharp peak corresponding to a melting point of 143°C.

## Claims

1. Polypropylene of high clarity which melts in the temperature range 125-155°C in which 80 to 98% of the propylene residues have the same steric orientation and the remainder have the opposite steric orientation.

2. Polypropylene according to claim 1 in which 90 to 98% of the polypropylene residues have the same steric orientation and at least 90% of the remaining residues are separated from one another.

3. Novel chemical compounds usable as catalyst components in the production of polypropylene as claimed in claim 1 or 2, which have a formula

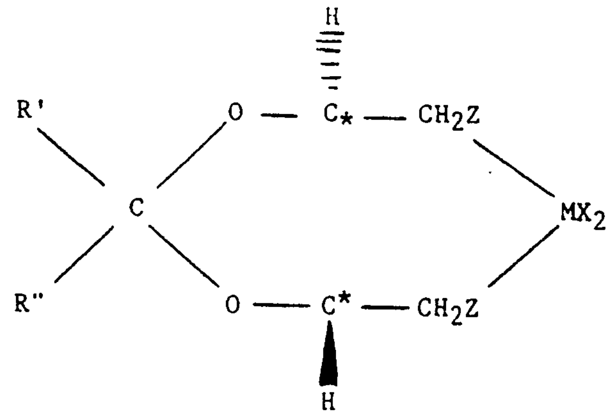

in which the assymetrical carbon atoms (which are identified by asterisks) with their substituents are not mirror images of one another, M represents hafnium, titanium or zirconium, X represents halogen, and R′

and R" are individually alkyl groups, and Z is

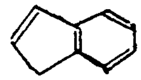,

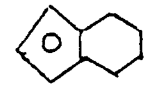

or

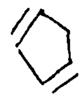

which groups may be substituted by lower alkyl groups having 1, 2 or 3 carbon atoms if desired.

4. Compounds as claimed in claim 1 in which M is zirconium and X is chlorine or bromine.

5. A process of producing a compound as claimed in claim 3 or 4 which comprises reacting a compound of formula

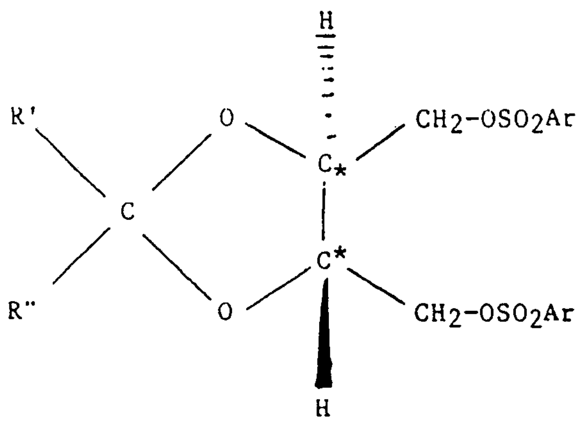

where Ar is an aryl group with a cyclopentadienyl magnesium halide of formula ZMgX to produce a compound of formula

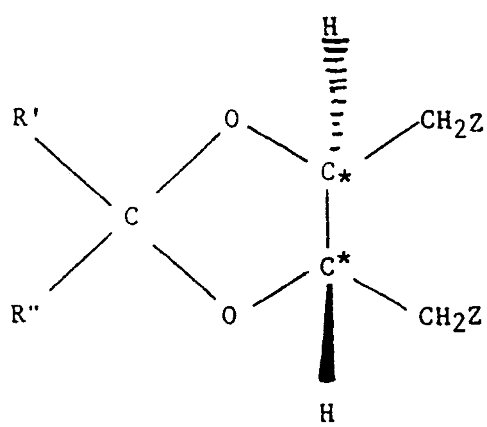

which is then converted to its di alkali metal salt and then reacted with a compound of formula $MX_4$.

6. A process of producing polypropylene according to claim 1 which comprises polymerising propylene in the presence of a compound as claimed in claim 3 or 4 and an organic aluminium compound.

7. Polypropylene produced by a process as claimed in claim 6.

8. A process as claimed in claim 5 which is carried out substantially as described in the Examples.

9. A compound as claimed in claim 3 made by a process according to claim 5 or 9.

10. A process for producing polypropylene substantially as described in the Examples.

European Patent Office

# EUROPEAN SEARCH REPORT

Application Number

EP 89 30 0705

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 284 708 (COSDEN TECHN.)<br>* Claims 1-36; page 6, lines 23-39; table 1 *<br>--- | 1,2 | C 08 F 110/06<br>C 08 F 4/64<br>C 07 F 17/00 |
| X | EP-A-0 185 918 (HOECHST)<br>* Claims; examples *<br>--- | 1,2 | |
| X | EP-A-0 197 319 (HOECHST)<br>* Whole document *<br>--- | 1,2 | |
| X | DIE MAKROMOLEKULARE CHEMIE/MACROMOLECULAR SYMPOSIA, vol. 3, June 1986, pages 377-387, Basel, CH; W. KAMINSKY et al.: "Olefinpolymerization with highly active soluble zirconium compounds using aluminoxane as co-catalyst"<br>* whole article *<br>--- | 1,2 | |
| X | JOURNAL OF THE AMERICAN CHEMICAL SOCIETY, vol. 106, no. 21, 1984, pages 6355-6364, American Chemical Society; J.A. EWEN: "Mechanisms of stereochemical control in propylene polymerizations with soluble group 4B metallocene/methylalumoxane catalysts"<br>* Whole article *<br>----- | 1,2 | TECHNICAL FIELDS SEARCHED (Int. Cl.5)<br>C 08 F<br>C 07 F |

The present search report has been drawn up for all claims

| Place of search | Date of completion of the search | Examiner |
|---|---|---|
| THE HAGUE | 07-08-1989 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document